# EUROPEAN PATENT SPECIFICATION

(11) **EP 4 660 589 B1**
(45) Date of publication and mention of the grant of the patent: **27.05.2026**
(21) Application number: 24382604.7
(22) Date of filing: 05.06.2024
(51) Int. Cl.: G01D 5/347

(54) **OPTOELECTRONIC MEASURING DEVICE**
OPTOELEKTRONISCHE MESSEINRICHTUNG
DISPOSITIF DE MESURE OPTOELECTRONIQUE

(43) Date of publication of application: 10.12.2025
(73) Proprietor: Fagor Automation, S.Coop., 20500 Arrasate-Mondragon (ES)
(72) Inventor: MORLANES CALVO, Tomas, 20500 Arrasate-Mondragon (ES); AZKONA IRIBAR, Julen Jose, 20500 Arrasate-Mondragon (ES)
(74) Representative: Galbaian S.Coop.

(56) References cited:
- EP-A1- 1 795 872
- EP-B1- 2 743 650

## Description

### TECHNICAL FIELD

The present invention relates to optoelectronic measuring devices, and more specifically to optoelectronic measuring devices comprising an absolute graduated scale.

### PRIOR ART

Optoelectronic measuring devices for detecting the displacement of an object are known. The device comprises a graduated scale which is usually attached to a static support, and a readhead which moves relative to the graduated scale.

The graduated scale can be made of glass or a metal strip, for example, depending on the requirements, and includes engraved markings.

The readhead comprises an optical assembly which is adapted to illuminate the graduated scale with a light, and to detect the illuminated marking pattern as a function of the light passing through or reflected from the graduated scale. As the readhead is moved, different parts of the graduated scale will light up.

The optoelectronic measuring device may be configured for linear displacement systems or for rotary displacement systems.

The marks engraved on the graduated scale may be periodic to measure relative displacements between the readhead and the graduated scale, or they may be of another type to determine the absolute position of the readhead relative to the graduated scale. In the latter case, the markings form codes which are not repeated along the entire length of the graduated scale, so that the code illuminated at each moment reflects an absolute position of the readhead relative to the graduated scale. The latter type of graduated scale is also known as an absolute scale.

In optoelectronic measuring devices comprising absolute scales, it is therefore very important to be able to have an image of the reflected part of the absolute scale as sharp as possible in order to determine the absolute position as accurately and error-free as possible.

Due to the manufacturing processes of absolute scales, these scales include imperfections (not completely flat surface) that negatively affect the position measurement. Devices are known which try to reduce this negative impact, and for this purpose comprise optical assemblies with certain elements between the light source and the final detector, and arranged in a certain way.

In some cases, as in EP1795872A1, these elements include a pinhole which allows an image of the part of the scale illuminated to be obtained in the detector in a wider range of positions than in the absence of such pinhole (where the image would be obtained in a single position), since the pinhole acts on the principle of a pinhole camera. Thus, in addition to having the image, there is a greater tolerance during the installation of the device, since the detector does not have to be arranged in a specific and exact position.

EP1795872A1 discloses an optoelectronic measuring device comprising an absolute graduated scale and an optical assembly for illuminating said graduated scale and for detecting which part of said graduated scale is illuminated. The optical assembly comprises a light source configured to emit light to illuminate the graduated scale, a pinhole which is traversed by at least a portion of the light reflected from the graduated scale, a detector configured to receive the light traversing the pinhole, and a beam splitter. Part of the light emitted by the light source is reflected in the beam splitter and reaches the graduated scale, where it is reflected, and part of the reflected light passes through the pinhole after passing through the beam splitter.

EP2743650B1 discloses an optoelectronic measuring device comprising an absolute graduated scale and an optical assembly for illuminating said graduated scale and for detecting which part of said graduated scale is illuminated. The optical assembly comprises a light source configured to emit light in an emitting direction to illuminate the graduated scale, a pinhole which is traversed by at least part of the light reflected on the graduated scale, a detector configured to receive the light passing through the pinhole, and a beam splitter in the path of the light between the light source and the pinhole.

### DISCLOSURE OF THE INVENTION

The object of the invention is to provide an optoelectronic measuring device, as defined in the claims.

The optoelectronic measuring device comprises an absolute graduated scale and an optical assembly for illuminating said graduated scale and for detecting which part of said graduated scale is illuminated. The optical assembly comprises a light source configured to emit light in an emitting direction to illuminate the graduated scale, a pinhole which is traversed by at least some of the light reflected from the graduated scale, a detector configured to receive the light traversing the pinhole, and a beam splitter in the path of the light between the light source and the pinhole.

Thanks to the pinhole, an image is generated which is captured by the detector and which represents the illuminated part of the graduated scale. This image is not generated at a single point, only at a certain distance from the pinhole, it is obtained over a certain range of distances, which allows a greater tolerance when positioning the detector with respect to the pinhole. In the absence of such pinhole, the image that represents the illuminated part of the graduated scale would be generated only at a certain point, which would require an exact arrangement of the detector to receive this image.

The optoelectronic measuring device further comprises a retro-reflecting device in the path of the light between the graduated scale and the pinhole, which allows the light to be concentrated on the focal point marked by the pinhole with greater ease and illumination.

The beam splitter is arranged between the light source and the pinhole in the emitting direction, and between the graduated scale and the retro-reflecting device in a second direction perpendicular to the emitting direction. The arrangement of the elements of the optical assembly is such that the light follows the following path between the light source and the detector: the emitted light reaches the beam splitter which directs part of this light to the graduated scale by illuminating it. Part of this light is reflected by the graduated scale and arrives back at the beam splitter, where it is divided again and part of the division thus reaches the retro-reflecting device. The light reaching the retro-reflecting device returns to the beam splitter, from where part of it is directed to the pinhole. All the light reaching the pinhole is converted into a mirror image of the illuminated part of the graduated scale, which reaches the detector. In this way, the detector has this image, detecting which part of the scale has been illuminated. The presence of the elements of the optical assembly described and arranged in the described manner makes it possible to obtain a compact optical assembly and, consequently, a compact optoelectronic measuring device, while maintaining the advantages described above.

These and other advantages and features of the invention will become apparent in view of the figures and the detailed description of the invention.

### DESCRIPTION OF THE DRAWINGS

Figure 1 shows an embodiment of the optoelectronic measuring device of the invention.
Figure 2 shows another embodiment of the optoelectronic measuring device of the invention.
Figure 3 shows another embodiment of the optoelectronic measuring device of the invention.
Figure 4 shows an electrical signal obtained from an image generated from a part of a graduated scale of an embodiment of the optoelectronic measuring device of the invention.
Figure 5 shows the part of the graduated scale of an embodiment of the optoelectronic measuring device of the invention, which results in an electrical signal in line with that shown in figure 4.

### DETAILED DISCLOSURE OF THE INVENTION

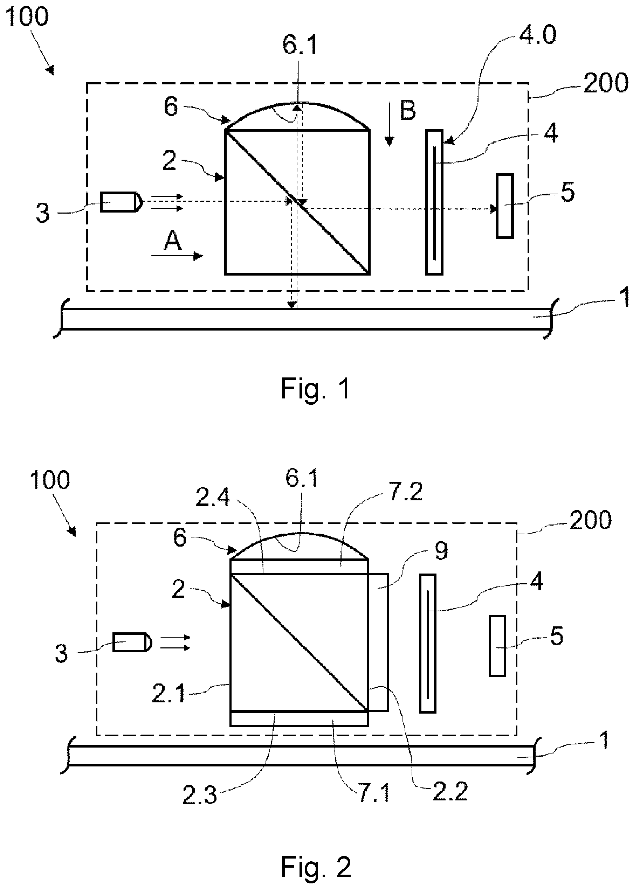

An optoelectronic measuring device 100, as shown in Figures 1 to 3, is used to determine the position between two objects, typically one of the objects being movable and the other static. In one example, the moving object may be a machining tool and the stationary object may be the table or bed of a machine where machining is performed.

When the relative motion between the two objects is linear, the device is a linear optoelectronic measuring device 100. When the relative motion is rotary, the device is a rotary optoelectronic measuring device 100. The proposed optoelectronic measuring device 100 is preferably linear.

A proposed optoelectronic measuring device 100 comprises a graduated scale 1 and an optical assembly 200 for illuminating said graduated scale 1 and for detecting which part of said graduated scale 1 is illuminated. The optical assembly 200 comprises a light source 3 configured to emit a light beam towards the graduated scale 1 to illuminate it, and a detector 5 configured to receive light passing through or reflected from the graduated scale 1. The detector 5 generates at least one electrical signal in response to the received light.

When an optoelectronic measuring device 100 is linear the graduated scale 1 is linear (extends longitudinally), and when an optoelectronic measuring device 100 is rotary the graduated scale 1 is disc-shaped or ring-shaped.

Depending on the requirements of the respective application, there are different types of graduated scales 1. For example:
- Some graduated scales comprise a periodic marking, such that the optoelectronic measuring device is configured to determine the relative displacement between the two objects. The electrical signal generated by the detector is periodic as one object is displaced, thus being able to determine the relative displacement between the two objects according to the number of periods that are counted in the electrical signal during this displacement (periods, half periods or the required submultiple are counted in each case). Such graduated scales are known as incremental scales.
- Other graduated scales comprise a reference in addition to the periodic marking, to determine the relative displacement between the two objects with respect to this reference. The detector is adapted to generate an electrical signal to identify this reference, where appropriate, according to the light it receives.
- Other graduated scales 1 comprise an engraved code, which is not repeated along its length, so that by detecting which code has been illuminated, the position of the moving object relative to the static object (and the displacement between the two objects) is known. This type of graduated scale 1 is known as absolute scales.

The proposed optoelectronic measuring device 100 comprises an absolute scale, so that by detecting which code of graduated scale 1 has been illuminated, it is known which part of graduated scale 1 has been illuminated.

The optoelectronic measuring device 100 is configured to generate an image representative of said illuminated graduated scale part 1 and to detect which part of said graduated scale 1 is illuminated. The optoelectronic measuring device 100 may comprise a control unit not shown in the figures, for determining which part of the absolute graduated scale 1 is illuminated, from said image.

The optical assembly 200 comprises a light source 3 configured to emit light in an emitting direction A to illuminate the graduated scale 1 and a detector 5 configured to receive light passing through or reflected from the graduated scale 1.

Each illuminated section of the absolute graduated scale 1 comprises a specific section of an engraved code, which as described above is not repeated along the length of the absolute graduated scale 1. The detector 5 converts the light into at least one electrical signal, and said electrical signal is representative of the illuminated code section and is thus used to determine which section of the graduated scale 1 has been illuminated. The control unit receives this electrical signal and thus determines the illuminated section. The detector 5 preferably comprises a linear arrangement of photodetectors, although it could for example comprise a two-dimensional arrangement of photodetectors.

The better this light received by the detector 5 represents the image of the illuminated part of the graduated scale 1, the better it will be possible to detect which part of the graduated scale 1 has been illuminated. It is therefore well known how important it is to position both the light source 3 and the detector 5 with respect to the graduated scale 1, in order to place the detector 5 in such a position that the light received best represents this image.

The optoelectronic measuring device 100 further comprises a pinhole 4 which is traversed by at least part of the light reflected on the graduated scale 1 to obtain an image of the illuminated part of the graduated scale 1 over a wider range of spacings, thereby increasing the range of spacings over which the detector 5 can be arranged so that the received light is and image representative of the part of the graduated scale 1 that has been illuminated. The detector 5 is thus arranged and configured to receive the light passing through said pinhole 4, said detector 5 receiving said image.

Preferably the light source 3 is configured to emit a collimated light, and the optoelectronic measuring device 100 further comprises a beam splitter 2 in the path of the light between the light source 3 and the graduated scale 1, and between said graduated scale 1 and the pinhole 4, to facilitate the mounting of said optoelectronic measuring device 100 and make it more compact.

The optoelectronic measuring device 100 may comprise a light-opaque element 4.0 with a through hole, the through hole being the pinhole 4. The pinhole 4 may be circular, although the symmetry of the lines of the graduated scale 1 allows it to be rectangular in shape.

The optical assembly 200 further comprises a retro-reflecting device 6, which focuses the light onto the pinhole 4. The beam splitter 2 is arranged between the light source 3 and the pinhole 4 in the emitting direction A, and between the graduated scale 1 and the retro-reflecting device 6 in a second direction B perpendicular to the emitting direction A. With this arrangement of these elements, the beam splitter 2 receives the light emitted by the light source 3 and splits it into two components. One of these components is directed towards the graduated scale 1 illuminating it (the one moving in the second direction B), and is reflected by the graduated scale 1. This reflected light contains information relating to the part of the graduated scale 1 which has been illuminated, thus containing the information to be detected, and on reaching the beam splitter 2 it is split again into at least two components. One of these components reaches the retro-reflecting device 6 (the one travelling in the direction opposite to the second direction B), from where it returns to beam splitter 2. At beam splitter 2 splits it again and one of the components travels in the emitting direction A towards pinhole 4, and reaches the detector 5 after passing through the pinhole 4.

Preferably the beam splitter 2 comprises a cube (as shown in figures 1 to 3) and comprises a first lateral face 2.1 facing the light source 3, a second lateral face 2.2 opposite to the first lateral face 2.1 facing the pinhole 4, a bottom face 2.3 facing the graduated scale 1 and an upper face 2.4 facing the retro-reflecting device 6, as shown in the embodiments shown in the figures. This configuration of the beam splitter 2 facilitates at least the assembly of the optical assembly 200, since it facilitates the arrangement of all the elements between them. The cube may be formed by two prisms joined together, the junction area being in this case the one that acts as beam splitter 2.

Preferably, in embodiments where the beam splitter 2 is a cube the retro-reflecting device 6 is attached to the upper face 2.4 of the beam splitter 2, thereby facilitating at least the mounting of the optical assembly 200. Preferably the beam splitter 2 and the retro-reflecting device 6 thus form a single body.

The retro-reflecting device 6 comprises a concave surface 6.1 facing the beam splitter 2 (to the upper face 2.4 of the beam splitter 2 when said beam splitter 2 is a cube), and said retro-reflecting device 6 comprises a mirror. In some embodiments the retro-reflecting device 6 comprises a curved mirror (comprising the concave surface 6.1), while in other embodiments the retro-reflecting device 6 comprises a lens with its curved face mirrored.

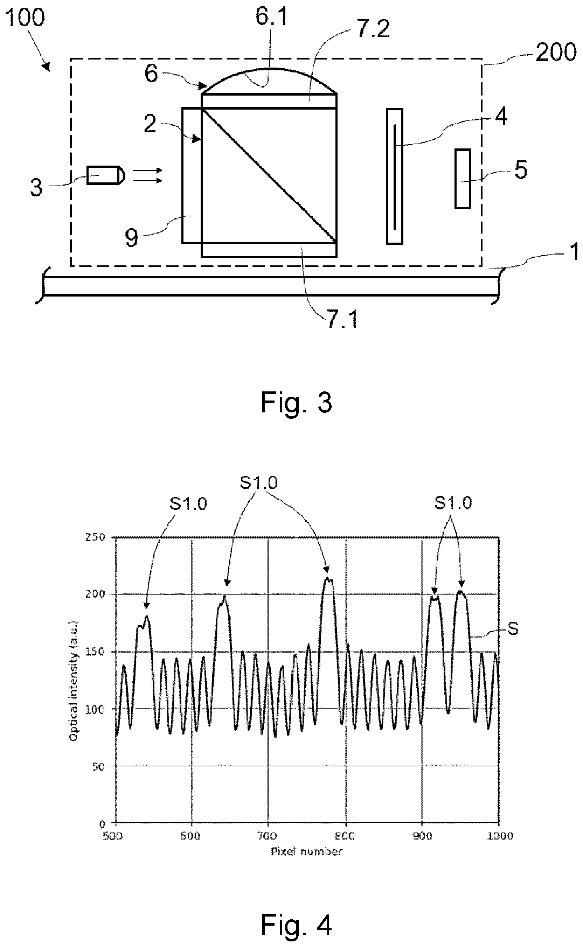

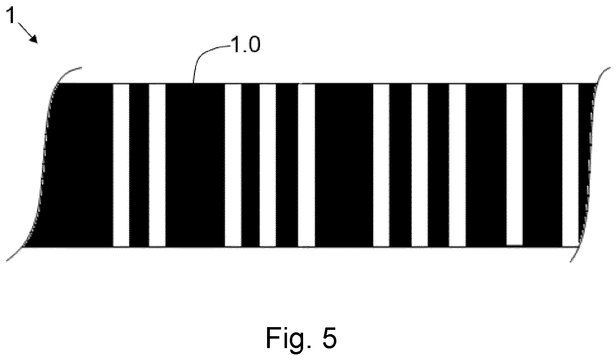

Preferably the pinhole 4 comprises a rectangular shape, the longest side being the side extending parallel (considering the effect of the beam splitter 2) to the lines of the graduated scale 1. This configuration allows a greater passage of light and a greater tolerance is obtained with respect to the pitch angle between the optical assembly 200 and the graduated scale 1 than with a circular pinhole 4 (which is the conventional shape for this type of hole).This optical arrangement increases the range of spacings between the optical assembly 200 and the graduated scale 1 in which the image is suitable as being representative of the illuminated part of the graduated scale 1, thereby increasing the ease of mounting of the optoelectronic measuring device 100. The level of sharpness required to know which part of the graduated scale 1 has been illuminated is lower than the level required in other applications (such as photography for example, where a very sharp image of the photographed object is required), so this loss of sharpness is acceptable and does not adversely affect the final result. Figure 4 shows the electrical signal S obtained from an image representing the part of the graduated scale 1 shown in figure 5 (for a transparent graduated scale 1 with opaque graduation marks 1.0).

According to the part of the graduated scale 1 shown in figure 1, the light reaching the graduated scale 1 is reflected in the areas not comprising graduation marks 1.0, and the detector 5 receives more light in the representative image of these areas. These areas are identified by the reference S1.0 in the electrical signal S in figure 4. Although there is a loss of fidelity from the point of view of the image, this is a desirable effect in terms of signal processing. It allows the absolute code recorded on graduated scale 1 to be detected in a very simple way.

The extension in the direction parallel to the lines of the engraving of the graduated scale 1 makes it possible to obtain an adequate representative image in more positions, thus improving the mounting of the optical assembly 200 without affecting the final objective of the optoelectronic measuring device 100. Since the signal is processed only in one of the image directions, the use of a rectangular-shape pinhole 4 increases the mounting tolerances in the direction where the rectangle is more elongated. In particular, it increases the mounting tolerances of the relative rotation of the optical assembly 200 with respect to the reading direction of the graduated scale 1 (roll angle).

In some embodiments, the beam splitter 2 is a polarizing beam splitter, thereby increasing the light reaching the detector 5. In some embodiments, such as that shown by way of example in Figure 2, the optical assembly 200 comprises a first phase retarder 7.1 arranged between beam splitter 2 and the graduated scale 1, a second phase retarder 7.2 arranged between the upper face 2.4 of said beam splitter 2 and the retro-reflecting device 6, and a polarizer 9 arranged between the beam splitter 2 and pinhole 4. Preferably, the first retarder 7.1 is a quarter lambda (λ/4) element and the second retarder 7.2 is a quarter lambda (λ/4) element.

In other embodiments in which the beam splitter 2 is a polarizing beam splitter, such as that shown by way of example in Figure 3, the optical assembly 200 comprises a first phase retarder 7.1 arranged between the beam splitter 2 and the graduated scale 1, a second phase retarder 7.2 arranged between said beam splitter 2 and the retro-reflecting device 6, and a polarizer 9 arranged between said beam splitter 2 and the light source 3. Preferably the first retarder 7.1 is a quarter lambda element and the second retarder 7.2 is a quarter lambda element.

## Claims

1. Optoelectronic measuring device comprising an absolute graduated scale (1) and an optical assembly (200) for illuminating said graduated scale (1) and for detecting which part of said graduated scale (1) is illuminated, the optical assembly (200) comprising a light source (3) configured to emit light in an emitting direction (A) to illuminate the graduated scale (1), a pinhole (4) which is traversed by at least part of the light reflected on the graduated scale (1), a detector (5) configured to receive the light passing through the pinhole (4), and a beam splitter (2) in the path of the light between the light source (3) and the pinhole (4), **characterised in that** the optical assembly (200) further comprises a retro-reflecting device (6) in the path of the light between the graduated scale (1) and the pinhole (4), the beam splitter (2) being arranged between the light source (3) and the pinhole (4) in the emitting direction (A), and between the graduated scale (1) and the retro-reflecting device (6) in a second direction (B) perpendicular to the emitting direction (A).

2. Optoelectronic measuring device according to claim 1, wherein the beam splitter (2) comprises a cube with a first side face (2.1) facing the light source (3), a second side face (2.2) opposite to the first side face (2.1) and facing the pinhole (4), a bottom face (2.3) facing the graduated scale (1) and an upper face (2.4) facing the retro-reflecting device (6).

3. Optoelectronic measuring device according to claim 2, wherein the retro-reflecting device (6) is attached to the upper face (2.4) of the beam splitter (2).

4. Optoelectronic measuring device according to any of claims 1 to 3, wherein the retro-reflecting device (6) comprises a concave surface (6.1) facing the beam splitter (2).

5. Optoelectronic measuring device according to any of claims 1 to 4, wherein the retro-reflecting device (6) comprises a mirror.

6. Optoelectronic measuring device according to claim 5, wherein the retro-reflecting device (6) comprises a curved mirror having a concave surface (6.1) facing the beam splitter (2).

7. Optoelectronic measuring device according to claim 5, wherein the retro-reflecting device (6) comprises a lens with a mirrored concave surface (6.1) facing the beam splitter (2).

8. Optoelectronic measuring device according to any of claims 1 to 7, wherein the pinhole (4) comprises a rectangular shape.

9. Optoelectronic measuring device according to claim 8, wherein the beam splitter (2) is a polarizing beam splitter and the optical assembly (200) comprises a first phase retarder (7.1) arranged between the bottom face (2.3) of the beam splitter (2) and the graduated scale (1), a second phase retarder (7.2) arranged between the upper face (2.4) of said beam splitter (2) and the retro-reflecting device (6), and a polarizer (9) arranged between the second side face (2.2) of said beam splitter (2) and the pinhole (4).

10. Optoelectronic measuring device according to any of claims 1 to 8, wherein the beam splitter (2) is polarizing and the optical assembly (200) comprises a first phase retarder (7.1) between the beam splitter (2) and the graduated scale (1), a second phase retarder (7.2) between the beam splitter (2) and the retro-reflecting device (6), and a polarizer (9) between the beam splitter (2) and the light source (3).

11. Optoelectronic measuring device according to claim 9 or 10, wherein the first retarder (7.1) is a quarter lambda element and wherein the second retarder (7.2) is a quarter lambda element.

12. Optoelectronic measuring device according to any of claims 1 to 11, wherein the light source (3) is configured to emit collimated light.

13. Optoelectronic measuring device according to any of claims 1 to 12, wherein the detector (5) comprises a linear array of photodetectors.

14. Optoelectronic measuring device according to any of claims 1 to 12, wherein the detector (5) comprises a two-dimensional arrangement of photodetectors.

## Patentansprüche

1. Optoelektronische Messvorrichtung, umfassend einen absoluten Graduierungsmaßstab (1) und eine optische Anordnung (200) zum Beleuchten des Graduierungsmaßstabs (1) und zum Erkennen, welcher Teil des Graduierungsmaßstabs (1) beleuchtet wird, wobei die optische Anordnung (200) eine Lichtquelle (3), die dazu konfiguriert ist, Licht in einer Emissionsrichtung (A) zu emittieren, um den Graduierungsmaßstab (1) zu beleuchten, eine Lochblende (4), die von mindestens einem Teil des an dem Graduierungsmaßstab (1) reflektierten Lichts durchlaufen wird, einen Detektor (5), der dazu konfiguriert ist, das durch die Lochblende (4) hindurchtretende Licht zu empfangen, und einen Strahlteiler (2) im Pfad des Lichts zwischen der Lichtquelle (3) und der Lochblende (4) umfasst, **dadurch gekennzeichnet, dass** die optische Anordnung (200) ferner eine retroreflektierende Vorrichtung (6) im Pfad des Lichts zwischen dem Graduierungsmaßstab (1) und der Lochblende (4) umfasst, wobei der Strahlteiler (2) in der Emissionsrichtung (A) zwischen der Lichtquelle (3) und der Lochblende (4) sowie in einer zweiten Richtung (B) senkrecht zur Emissionsrichtung (A) zwischen dem Graduierungsmaßstab (1) und der retroreflektierenden Vorrichtung (6) angeordnet ist.

2. Optoelektronische Messvorrichtung nach Anspruch 1, wobei der Strahlteiler (2) einen Würfel mit einer ersten Seitenfläche (2.1), die der Lichtquelle (3) zugewandt ist, einer zweiten Seitenfläche (2.2), die der ersten Seitenfläche (2.1) gegenüberliegt und der Lochblende (4) zugewandt ist, einer Bodenfläche (2.3), die dem Graduierungsmaßstab (1) zugewandt ist, und einer oberen Fläche (2.4), die der retroreflektierenden Vorrichtung (6) zugewandt ist, umfasst.

3. Optoelektronische Messvorrichtung nach Anspruch 2, wobei die retroreflektierende Vorrichtung (6) an der oberen Fläche (2.4) des Strahlteilers (2) angebracht ist.

4. Optoelektronische Messvorrichtung nach einem der Ansprüche 1 bis 3, wobei die retroreflektierende Vorrichtung (6) eine konkave Oberfläche (6.1) umfasst, die dem Strahlteiler (2) zugewandt ist.

5. Optoelektronische Messvorrichtung nach einem der Ansprüche 1 bis 4, wobei die retroreflektierende Vorrichtung (6) einen Spiegel umfasst.

6. Optoelektronische Messvorrichtung nach Anspruch 5, wobei die retroreflektierende Vorrichtung (6) einen gekrümmten Spiegel mit einer konkaven Oberfläche (6.1) umfasst, die dem Strahlteiler (2) zugewandt ist.

7. Optoelektronische Messvorrichtung nach Anspruch 5, wobei die retroreflektierende Vorrichtung (6) eine Linse mit einer verspiegelten konkaven Oberfläche (6.1) umfasst, die dem Strahlteiler (2) zugewandt ist.

8. Optoelektronische Messvorrichtung nach einem der Ansprüche 1 bis 7, wobei die Lochblende (4) eine rechteckige Form umfasst.

9. Optoelektronische Messvorrichtung nach Anspruch 8, wobei der Strahlteiler (2) ein polarisierender Strahlteiler ist und die optische Anordnung (200) einen ersten Phasenverzögerer (7.1), der zwischen der Bodenfläche (2.3) des Strahlteilers (2) und dem Graduierungsmaßstab (1) angeordnet ist, einen zweiten Phasenverzögerer (7.2), der zwischen der oberen Fläche (2.4) des Strahlteilers (2) und der retroreflektierenden Vorrichtung (6) angeordnet ist, und einen Polarisator (9), der zwischen der zweiten Seitenfläche (2.2) des Strahlteilers (2) und der Lochblende (4) angeordnet ist, umfasst.

10. Optoelektronische Messvorrichtung nach einem der Ansprüche 1 bis 8, wobei der Strahlteiler (2) polarisierend ist und die optische Anordnung (200) einen ersten Phasenverzögerer (7.1) zwischen dem Strahlteiler (2) und dem Graduierungsmaßstab (1), einen zweiten Phasenverzögerer (7.2) zwischen dem Strahlteiler (2) und der retroreflektierenden Vorrichtung (6) und einen Polarisator (9) zwischen dem Strahlteiler (2) und der Lichtquelle (3) umfasst.

11. Optoelektronische Messvorrichtung nach Anspruch 9 oder 10, wobei der erste Verzögerer (7.1) ein Viertel-Lambda-Element ist und wobei der zweite Verzögerer (7.2) ein Viertel-Lambda-Element ist.

12. Optoelektronische Messvorrichtung nach einem der Ansprüche 1 bis 11, wobei die Lichtquelle (3) dazu konfiguriert ist, kollimiertes Licht zu emittieren.

13. Optoelektronische Messvorrichtung nach einem der Ansprüche 1 bis 12, wobei der Detektor (5) eine lineare Reihe von Fotodetektoren umfasst.

14. Optoelektronische Messvorrichtung nach einem der Ansprüche 1 bis 12, wobei der Detektor (5) eine zweidimensionale Anordnung von Fotodetektoren umfasst.

## Revendications

1. Dispositif de mesure optoélectronique comprenant une règle graduée absolue (1) et un ensemble optique (200) pour éclairer ladite règle graduée (1) et pour détecter quelle partie de ladite règle graduée (1) est éclairée, l'ensemble optique (200) comprenant une source lumineuse (3) configurée pour émettre de la lumière dans une direction d'émission (A) afin d'éclairer la règle graduée (1), un trou d'aiguille (4) qui est traversé par au moins une partie de la lumière réfléchie sur la règle graduée (1), un détecteur (5) configuré pour recevoir la lumière passant à travers le trou d'aiguille (4), et un séparateur de faisceau (2) sur le trajet de la lumière entre la source lumineuse (3) et le trou d'aiguille (4), **caractérisé en ce que** l'ensemble optique (200) comprend en outre un dispositif rétroréfléchissant (6) sur le trajet de la lumière entre la règle graduée (1) et le trou d'aiguille (4), le séparateur de faisceau (2) étant agencé entre la source lumineuse (3) et le trou d'aiguille (4) dans la direction d'émission (A), et entre la règle graduée (1) et le dispositif rétroréfléchissant (6) dans une seconde direction (B) perpendiculaire à la direction d'émission (A).

2. Dispositif de mesure optoélectronique selon la revendication 1, dans lequel le séparateur de faisceau (2) comprend un cube avec une première face latérale (2.1) tournée vers la source lumineuse (3), une seconde face latérale (2.2) opposée à la première face latérale (2.1) et tournée vers le trou d'aiguille (4), une face inférieure (2.3) tournée vers la règle graduée (1) et une face supérieure (2.4) tournée vers le dispositif rétroréfléchissant (6).

3. Dispositif de mesure optoélectronique selon la revendication 2, dans lequel le dispositif rétroréfléchissant (6) est fixé à la face supérieure (2.4) du séparateur de faisceau (2).

4. Dispositif de mesure optoélectronique selon l'une quelconque des revendications 1 à 3, dans lequel le dispositif rétroréfléchissant (6) comprend une surface concave (6.1) tournée vers le séparateur de faisceau (2).

5. Dispositif de mesure optoélectronique selon l'une quelconque des revendications 1 à 4, dans lequel le dispositif rétroréfléchissant (6) comprend un miroir.

6. Dispositif de mesure optoélectronique selon la revendication 5, dans lequel le dispositif rétroréfléchissant (6) comprend un miroir courbe présentant une surface concave (6.1) tournée vers le séparateur de faisceau (2).

7. Dispositif de mesure optoélectronique selon la revendication 5, dans lequel le dispositif rétroréfléchissant (6) comprend une lentille avec une surface concave (6.1) réfléchissante tournée vers le séparateur de faisceau (2).

8. Dispositif de mesure optoélectronique selon l'une quelconque des revendications 1 à 7, dans lequel le trou d'aiguille (4) présente une forme rectangulaire.

9. Dispositif de mesure optoélectronique selon la revendication 8, dans lequel le séparateur de faisceau (2) est un séparateur de faisceau polarisant et l'ensemble optique (200) comprend un premier retardateur de phase (7.1) agencé entre la face inférieure (2.3) du séparateur de faisceau (2) et la règle graduée (1), un second retardateur de phase (7.2) agencé entre la face supérieure (2.4) dudit séparateur de faisceau (2) et le dispositif rétroréfléchissant (6), et un polariseur (9) agencé entre la seconde face latérale (2.2) dudit séparateur de faisceau (2) et le trou d'aiguille (4).

10. Dispositif de mesure optoélectronique selon l'une quelconque des revendications 1 à 8, dans lequel le séparateur de faisceau (2) est polarisant et l'ensemble optique (200) comprend un premier retardateur de phase (7.1) entre le séparateur de faisceau (2) et la règle graduée (1), un second retardateur de phase (7.2) entre le séparateur de faisceau (2) et le dispositif rétroréfléchissant (6), et un polariseur (9) entre le séparateur de faisceau (2) et la source lumineuse (3).

11. Dispositif de mesure optoélectronique selon la revendication 9 ou 10, dans lequel le premier retardateur (7.1) est un élément quart d'onde et dans lequel le second retardateur (7.2) est un élément quart d'onde.

12. Dispositif de mesure optoélectronique selon l'une quelconque des revendications 1 à 11, dans lequel la source lumineuse (3) est configurée pour émettre une lumière collimatée.

13. Dispositif de mesure optoélectronique selon l'une quelconque des revendications 1 à 12, dans lequel le détecteur (5) comprend une matrice linéaire de photodétecteurs.

14. Dispositif de mesure optoélectronique selon l'une quelconque des revendications 1 à 12, dans lequel le détecteur (5) comprend une disposition bidimensionnelle de photodétecteurs.
